# EUROPÄISCHE PATENTSCHRIFT

(11) **EP 2 039 604 B1**
(45) Veröffentlichungstag und Bekanntmachung des Hinweises auf die Patenterteilung: **01.03.2017**
(21) Anmeldenummer: 08016066.6
(22) Anmeldetag: 12.09.2008
(51) Int. Cl.: B64D 1/04, F41A 9/09, G01B 7/00, G01S 5/16, G01B 7/14

(54) **Verfahren zur Bestimmung des Abstands zwischen zwei Aussenlasten an einem Flugzeug oder Flugkörper bei der Abtrennung einer der beiden Aussenlasten**
Method for determining the difference between two external loads on an airplane or missile when one of the two external loads is detached
Procédé de détermination de l'intervalle entre deux charges extérieures sur un avion ou aéronef lors de la séparation d'une des deux charges

(30) Priorität: 21.09.2007 DE 102007045205
(43) Veröffentlichungstag der Anmeldung: 25.03.2009
(73) Patentinhaber: Airbus Defence and Space GmbH, 85521 Ottobrunn (DE)
(72) Erfinder: Donauer, Stefan, 86529 Schrobenhausen (DE); Deslandes, Roland , Dr., 82008 Unterhaching (DE)
(74) Vertreter: Isarpatent

(56) Entgegenhaltungen:
- US-A- 4 372 192
- US-A- 4 422 041
- US-A- 4 982 188
- US-B1- 6 330 866

## Beschreibung

Die Erfindung betrifft ein Verfahren zur Bestimmung des Abstands zwischen zwei Außenlasten an einem Flugzeug oder Flugkörper, bei der Abtrennung einer der beiden Außenlasten.

Bei modernen Kampflugzeugen sind die Außenlasten (insbesondere Lenkflugkörper, Raketen, Bomben) typischerweise sehr dicht beieinander angeordnet. Um die sichere Abtrennung einer Außenlast zu ermöglichen, sind bestimmte Mindestabstände (im Bereich > 2 inches) zu den übrigen Außenlasten am Flugkörper während des gesamten Abtrennvorgangs einzuhalten. Die Einhaltung dieser Mindestabstände muss in Flugversuchen nachgewiesen werden.

Die Abstandermittlung wird üblicherweise mit Hilfe von Videoaufzeichnungen durchgeführt. Allerdings ist zur korrekten Auswertung des Filmes die Kenntnis des genauen Zeitpunktes für das Auftreten der kleinsten Distanz, Minimum Miss Distance (MMD), unabdingbar. Dies ist erforderlich, weil die Kamera einer perspektivischen Verzerrung unterliegt und somit eine ausreichend genaue Zuordnung des MMD-Zeitpunkts häufig nicht möglich ist.

In der Druckschrift US 4,982,188 A, welche als nächstliegender Stand der Technik betrachtet wird, wird eine Vorrichtung zur Positionsbestimmung einer Außenlast an einem Flugzeug während des Abtrennvorgangs der Außenlast beschrieben. Die Vorrichtung enthält am Flugzeug angebrachte elektro-optische Sensoren, welche sequenziell ausgelöste LEDs detektieren, die an der abzutrennenden Außenlast angebracht sind.

Die Druckschriften US 4,422,041 A und US 4,372,192 A offenbaren magnetische Systeme zur Positionsbestimmung eines Projektils innerhalb der Abschussröhre des Projektils. Das Projektil ist an seiner Mantelfläche mit ringförmigen Magneten umgeben. Die Positionsbestimmung erfolgt mit Hilfe einer Induktionsspule.

Der Erfindung liegt die Aufgabe zugrunde, ein gattungsgemäßes Verfahren zur Abstandsermittlung zu schaffen, welches mit nur geringem Aufwand installiert werden kann und welches außerdem nur geringe aerodynamische Interferenzen erzeugt.

Diese Aufgabe wird mit dem Verfahren nach Anspruch 1 gelöst. Vorteilhafte Ausgestaltungen der Erfindung sind Gegenstände von Unteransprüchen.

Erfindungsgemäß wird zur Abstandsmessung der Einsatz eines oder mehrerer Magnetfeldsensoren vorgeschlagen. Dieser wird bevorzugt an der benachbarten, während des Abtrennvorgangs stationären Außenlast angebracht. An der abzutrennenden Außenlast selbst sind ein oder mehrere Magnete angeordnet. Durch den Einsatz mehrerer Sensoren kann die Genauigkeit erhöht werden.

Als Magnetfeldsensor kann ein handelsüblicher Sensor verwendet werden (z.B. Philipps Semiconductor KMZ Series). Es handelt sich dabei bevorzugt um einen passiven Sensor.

Die vom Sensor gemessene Feldstärke wird zeitlich aufgezeichnet. Unter Zugrundlegung einer entsprechenden Eichung kann neben dem Zeitpunkt des MMD auch der MMD selbst unmittelbar aus dem Sensorsignal bestimmt werden.

Gemäß der Erfindung wird aus dem Sensorsignal zunächst nur der Zeitpunkt der maximalen Feldstärke ermittelt. Dieser entspricht dem Zeitpunkt der maximalen Annäherung. Diese Information dient dann der Auswahl des zugehörigen Video-Frames aus der Kamera-Aufzeichnung des Abtrennvorgangs. Aus diesem Kamerabild wird dann die MMD bestimmt.

Das erfindungsgemäße Verfahren kann sowohl an einem bemannten Flugzeug als auch einem unbemannten Flugkörper (Drohnen, UAV = unmanned aerial vehicle) zur Anwendung kommen.

Der erfindungsgemäße Einsatz eines Magnetfelssensors führt zu erheblichen Vorteilen:
- Aufgrund geringer Abmessungen der Sensoren ist die aerodynamische Interferenz, die das Trennungsverhalten des Flugkörpers beeinflusst, nur gering.
- Es sind keinerlei mechanische Teile vorhanden, die Flatter- oder Vibrationsprobleme induzieren und das Messsignal unbrauchbar machen könnten.
- Es sind keinerlei elektronische Prelleffekte zu erwarten.
- Es wird eine erheblich leichtere Installation unter Flight Test Instrumentation (FTI) Aspekten ermöglicht.

Konkrete Ausführungen der Erfindung werden anhand unter Bezugnahme auf Fig. näher erläutert:
- Fig. 1: zeigt in Rückansicht (Blickrichtung von hinten parallel zur Flugzeuglängsachse) mehrere Außenlasten an der Unterseite eines Kampflugzeugs.
- Fig. 2: zeigt dieselbe Konfiguration gesehen von unten (Blickrichtung parallel zur Flugzeughochachse - Fig. 2 nicht maßstabsgerecht zu Fig. 1).
- Fig. 3: zeigt den Bereich aus Fig. 1, in dem sich die beiden Außenlasten am nächsten kommen, in vergrößertem Maßstab.
- Fig. 4: zeigt den Bereich aus Fig. 2, in dem sich die beiden Außenlasten am nächsten kommen, in vergrößerten Maßstab.

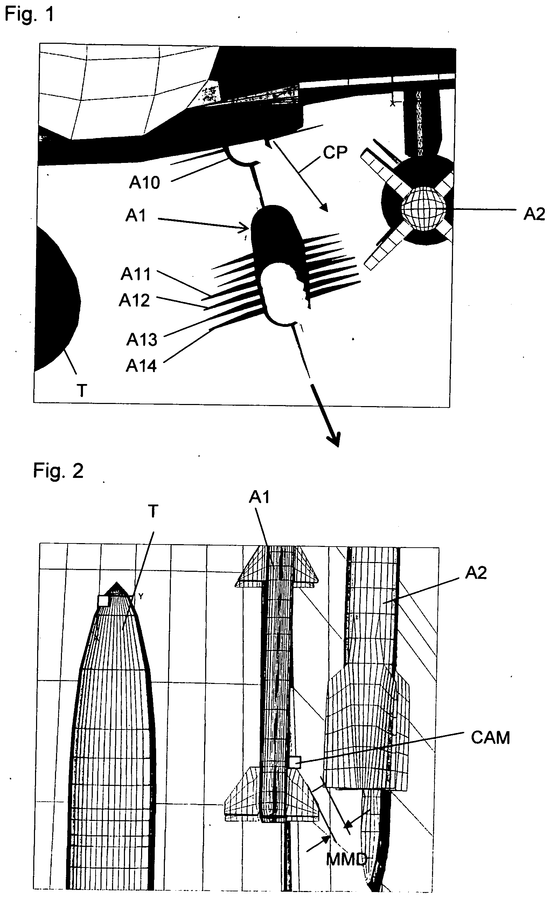

Fig. 1 zeigt die Unterseite eines Kampfflugzeugs, an der zwei Außenlasten A1, A2 relativ eng benachbart zueinander angeordnet sind. Außenlast A1 kann z.B. eine Luft-Luft-Raktete sein, Außenlast A2 eine Bombe. Außenlast A1 wird abgetrennt.

Die entsprechende Bewegungsrichtung ist eingezeichnet. Außenlast T ist ein Außentank des Flugzeugs.

Die Fig. 1 zeigt die Außenlast A1 sowohl in ihrer Installationsposition A10 nahe dem Flugzeugrumpf wie auch in vier Momentaufnahmen A11, A12, A13, A14, in denen sie der anderen Außenlast A2 am nächsten kommt. Die andere Außenlast A2 verändert ihre Position während des Abtrennvorgangs von A1 nicht. Die minimale Distanz MMD zwischen den beiden Außenlasten A1,A2 ist in Fig. 2 eingezeichnet.

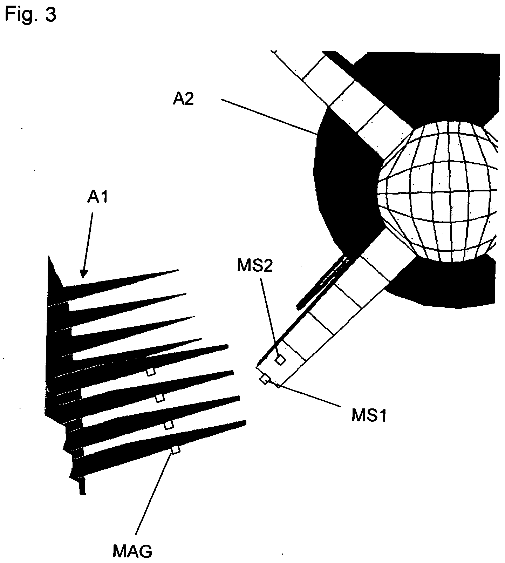

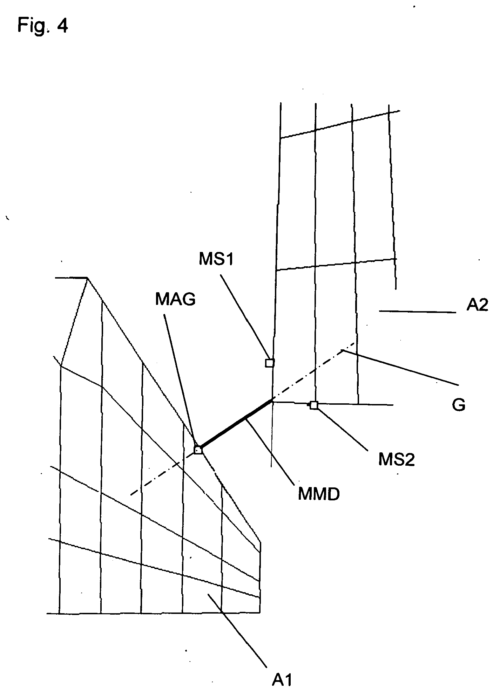

Magnetfeldsensoren und Magnete werden generell an geometrischen Orten an benachbarten Außenlasten A1,A2 angeordnet, an denen das Auftreten der MMD zu erwarten ist. Wie aus den Fig. 3 und 4 gut zu erkennen ist, sind zur Abstandsmessung an der Seitenkante und der Hinterkante des Flügels der Außenlast A2 passive Magnetfeldsensoren MS1, MS2 angeordnet. An der Vorderkante des Flügels der abgetrennten Außenlast A1 ist ein kleiner Magnet MAG angeordnet, der Abmessungen im Millimeterbereich aufweist (z.B. Kantenlängen 2 x 4 X 6 mm). Da auch die Sensoren MS sehr klein ausgeführt werden können (z.B. mit Kantenlängen 2 X 5 X 5 mm) werden aerodynamische Störungen sehr gering bleiben. Die beiden Sensoren MS1, MS2 werden vorteilhaft symmetrisch im rechten Winkel zu einer Geraden G angeordnet, die durch die zu erwartende Verbindungslinie der beiden Außenlasten A1,A2 bei Auftreten der MMD festgelegt ist. Der Magnet MAG liegt dabei auf der Geraden G.

In einer hier nicht gezeigten Ausführung mit einem Magneten und einem Magnetfeldsensor werden Magnet und Magnetfeldsensor bevorzugt jeweils an den geometrischen Orten der Außenlasten angebracht, an denen das Auftreten der MMD zu erwarten ist (bevorzugt auf der in Fig. 4 definierten Gerade G).

In einer weiteren Variante können zur Erzeugung einer größeren räumlichen Ausdehnung des Magnetfelds mehrere Magnetfeldsensoren eingesetzt werden (entweder zusammen mit einem oder mit mehreren Magnetfeldsensoren). Die Magnete können dabei z.B. hintereinander auf der in Fig. 4 definierten Gerade G angeordnet sein, während die Magnetfeldsensoren symmetrisch zur Geraden G liegen bzw. im Falle nur eines Magnetfeldsensors auf der Geraden G liegen.

Bei bekannten Positionen von Magnetfeldsensoren MS1, MS2 und Magnet MAG kann aus den Signalen der Magnetfeldsensoren sowohl der Zeitpunkt des MMD auch der MMD selbst bestimmt werden.

Zusätzlich kann eine Kamera CAM (Fig. 2) mit Blickrichtung CP (Fig. 1) vorhanden sein, um den Abtrennvorgang der Außenlast A1 zu beobachten. Ihre Blickrichtung ist auf den Bereich, an dem die MMD zu erwarten ist, gerichtet. Mit dem mittels Magnetfeldsensoren ermittelten Zeitpunkt des MMD kann aus dem zugehörigen Kamerabild der Wert des MMD bestimmt werden.

## Patentansprüche

1. Verfahren zur Bestimmung des Abstands zwischen zwei Außenlasten (A1,A2) an einem Flugzeug oder Flugkörper bei der Abtrennung einer (A1) der beiden Außenlasten (A1,A2), **dadurch gekennzeichnet, dass**
der zeitliche Verlauf des Abstands während des Abtrennvorgangs unter Einsatz eines oder mehrerer Magnetfeldsensoren (MS1,MS2) bestimmt wird;
aus dem Signal des oder der Magnetfeldsensor(en) (MS1,MS2) der Zeitpunkt des minimalen Abstands (MMD) bestimmt wird; und
der Abtrennvorgang mit einer Kamera (CAM) aufgezeichnet wird, wobei der mit dem oder den Magnetfeldsensor(en) (MS1,MS2) gewonnene Wert für den Zeitpunkt des minimalen Abstands (MMD) zur Auswahl des zugehörigen Kamerabilds verwendet wird, und aus dem so ermittelten Kamerabild der minimale Abstand (MMD) ermittelt wird.

2. Verfahren nach Anspruch 1, **dadurch gekennzeichnet, dass** der oder die Magnetfeldsensor(en) (MS1,MS2) an der stationären, nicht abzutrennenden Außenlast (A2) angeordnet ist und an der abzutrennenden Außenlast (A1) ein oder mehrere Magnete (MAG) angeordnet sind.

3. Verfahren nach einem der vorangehenden Ansprüche, **dadurch gekennzeichnet, dass** unter Zugrundelegung einer Eichung der minimale Abstand unmittelbar aus dem Signal des oder der Magnetfeldsensor(en) (MS1,MS2) bestimmt wird.

## Claims

1. Method of determining the distance between two external loads (A1, A2) on an aircraft or missile when jettisoning one (A1) of the two external loads (A1, A2), **characterised in that**
the chronological variation of the distance during the jettisoning procedure is determined using one or more magnetic field sensors (MS1, MS2); the point in time of the minimum miss distance (MMD) is determined from the signal from the magnetic field sensor(s) (MS1, MS2); and the jettisoning procedure is recorded by means of a camera (CAM), wherein the value obtained with the magnetic field sensor(s) (MS1, MS2) for the point in time of the minimum miss distance (MMD) is used for selecting the associated camera image, and the minimum miss distance (MMD) is determined from the camera image obtained in this way.

2. Method according to claim 1, **characterised in that** the magnetic field sensor(s) (MS1, MS2) is/are arranged on the stationary external load (A2) which will not be jettisoned and one or more magnets (MAG) is/are arranged on the external load (A1) which will be jettisoned.

3. Method according to any one of the preceding claims, **characterised in that** the minimum distance is determined directly from the signal from the magnetic field sensor(s) (MS1, MS2) based on a calibration.

## Revendications

1. Procédé de détermination de la distance entre deux charges extérieures (A1, A2) sur un aéronef ou un missile lors de la séparation d'une (A1) des deux charges extérieures (A1, A2), **caractérisé en ce que**
la variation temporelle de la distance pendant le procédé de séparation est déterminée en utilisant un ou plusieurs capteurs de champ magnétique (MS1, MS2) ;
le moment de la distance minimale (MMD) est déterminé à partir du signal du ou des capteur(s) de champ magnétique (MS1, MS2) ; et
l'opération de séparation est enregistrée par une caméra (CAM), la valeur obtenue pour le moment de la distance minimale (MMD) au moyen du ou des capteur (s) de champ magnétique (MS1, MS2) étant utilisée pour sélectionner l'image associée de la caméra, et la distance minimale (MMD) étant déterminée à partir de l'image de la caméra ainsi déterminée.

2. Procédé selon la revendication 1, **caractérisé en ce que** le ou les capteur(s) de champ magnétique (MS1, MS2) sont disposés sur la charge extérieure (A2) stationnaire non destinée à la séparation et un ou plusieurs aimants (MAG) sont disposés sur la charge extérieure (A1) destinée à la séparation.

3. Procédé selon l'une des revendications précédentes, **caractérisé en ce que** la distance minimale est déterminée directement à partir du signal du ou des capteur (s) de champ magnétique (MS1, MS2) sur la base d'un étalonnage.
